# DEMANDE DE BREVET EUROPEEN

(11) **EP 0 809 048 A1**
(43) Date de publication de la demande: **26.11.1997**
(21) Numéro de dépôt: 97401093.6
(22) Date de dépôt: 16.05.1997
(51) Int. Cl.: F16H 61/28

(54) **Dispositif de changement de vitesses pour véhicule automobile qui procure une assistance au changement de certains rapports**

(30) Priorité: 23.05.1996 FR 9606433
(71) Demandeur: Renault, 92109 Boulogne Billancourt (FR)
(72) Inventeur: Hennequet, Gonzalo, 92500 Rueil Malmaison (FR)

(57) **Abrégé**

L'invention propose un dispositif de changement de vitesses pour véhicule automobile comportant une boîte de vitesses (16) à rapports étagés reliée au moteur (10) du véhicule par un embrayage (17), un levier de changement de vitesses (20) coopérant avec une grille de sélection et de passage des vitesses et relié à un organe de commande (30) de la boîte (16), un vérin de commande (62) de l'organe (30,) et une unité de commande (34, 40, 80) du vérin (62) en réponse aux demandes de changement de rapport du conducteur, caractérisé en ce que, lorsque le conducteur a sélectionné la ligne de passage des rapports de marche avant les plus élevés, l'unité de commande (34, 40, 80) actionne le vérin (62) pour changer automatiquement de rapport en fonction d'un paramètre de fonctionnement du véhicule.

## Description

La présente invention a pour objet un dispositif de changement de vitesses pour véhicule automobile comportant une boîte de vitesses à rapports étagés associée au moteur du véhicule par l'intermédiaire d'un embrayage.

L'invention concerne plus particulièrement un dispositif permettant de piloter automatiquement les changements de vitesses lorsque le conducteur sélectionne deux rapports particuliers de marche avant, tels que les rapports les plus élevés, tout en fournissant une assistance au passage des autres rapports de la transmission.

Le document EP-A1-0.490.730 décrit et représente un dispositif de commande motorisé de changement de rapports de transmission pour une boîte de vitesses, en particulier pour un véhicule automobile, comportant notamment un vérin à double effet à commande proportionnelle relié à l'organe de commande de la boîte de vitesses sur laquelle il peut agir dans le sens du passage de l'un ou l'autre de deux rapports appartenant à une paire de rapports sélectionnée, et une unité de commande de ce vérin en fonction d'un paramètre représentatif d'une demande de changement de rapport par le conducteur du véhicule.

Dans ce document, le vérin hydraulique à double effet responsable du passage des rapports agit sur la boîte de vitesses lorsque le conducteur transmet un ordre de passage d'un rapport au moyen d'un bouton de commande ou d'un levier de changement de rapport appartenant à un mécanisme de commande manuelle de changement de rapport et qui est relié à l'organe de commande de la boîte de vitesses.

Le dispositif décrit et représenté dans ce document comporte aussi des moyens similaires pour assurer une sélection motorisée des différentes lignes de passage de la boîte de vitesses.

La présente invention propose un dispositif pour changer de rapport permettant d'assurer un changement automatique de certains rapports et de fournir un effort d'assistance au passage de certains autres rapports de la boîte de vitesses.

Elle concerne un dispositif de changement de vitesses pour véhicule automobile comportant une boîte de vitesses à rapports étagés reliée au moteur du véhicule par un embrayage, un levier de changement de vitesses coopérant avec une grille de sélection et de passage des vitesses et relié à un organe de commande de la boîte, un vérin de commande de l'organe et une unité de commande du vérin en réponse aux demandes de changement de rapport du conducteur, caractérisé en ce que, lorsque le conducteur a sélectionné la ligne de passage des rapports de marche avant les plus élevés, l'unité de commande actionne le vérin pour changer automatiquement de rapport en fonction d'un paramètre de fonctionnement du véhicule.

Selon d'autres caractéristiques de l'invention :
- le paramètre de fonctionnement du véhicule est représentatif de la charge du moteur ;
- le dispositif comporte un capteur mesurant l'effort appliqué au levier par le conducteur pour passer une vitesse, dont le signal est transmis à l'unité de commande du vérin pour fournir une assistance au passage du rapport ;
- le vérin est un vérin hydraulique dont les deux chambres de commande sont reliées à une source de fluide sous pression par l'intermédiaire d'un distributeur commandé par l'unité de commande ;
- le dispositif comporte un réducteur de pression piloté par l'unité de commande et qui est interposé entre la source de fluide sous pression et le distributeur hydraulique pour permettre un pilotage proportionnel en pression du vérin ;
- le dispositif comporte un clapet piloté par l'unité de commande qui est interposé entre la source de fluide sous pression et le distributeur hydraulique ;
- le clapet piloté est agencé en amont du réducteur de pression piloté.
- l'unité de commande comporte au moins un calculateur principal qui reçoit des signaux représentatifs d'une demande de changement de rapport par le conducteur, du fonctionnement du véhicule et de l'état du vérin, et au moins un calculateur secondaire relié au calculateur principal et qui commande l'actionnement du vérin ;
- les composants qui pilotent l'alimentation en fluide hydraulique sous pression des chambres du vérin sont reliés au calculateur secondaire ;
- le dispositif comporte un vérin à simple effet à commande proportionnelle qui agit sur l'embrayage et dont l'actionnement est provoqué par l'unité de commande ;
- le dispositif comporte des moyens pour interrompre la liaison mécanique entre le mécanisme de commande manuelle de changement de rapport et l'organe de commande de la boîte de vitesses lorsque les deux rapports de marche avant les plus élevés sont sélectionnés par le conducteur.

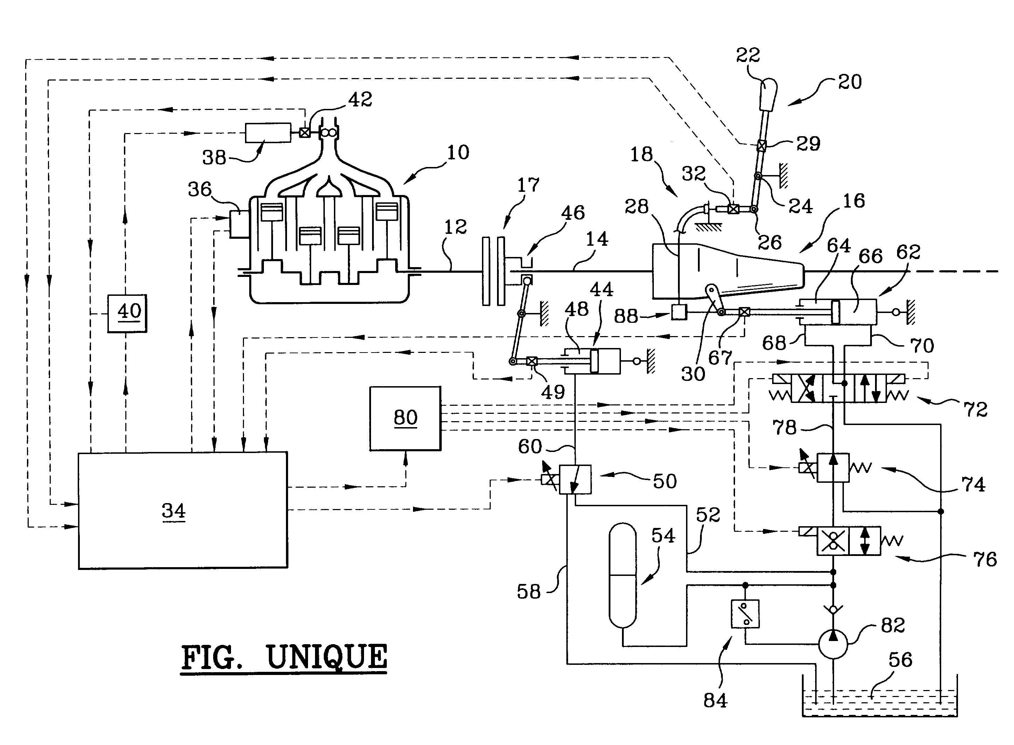

D'autres caractéristiques et avantages de l'invention apparaîtront à la lecture de la description détaillée qui suit pour la compréhension de laquelle on se reportera au dessin annexé dont la figure unique est une représentation schématique des différents éléments constitutifs du dispositif en liaison avec certains composants de la transmission du véhicule.

On a représenté sur la figure unique une transmission de véhicule automobile comportant notamment un moteur à combustion interne 10 dont l'arbre de sortie 12 est relié à l'arbre d'entrée 14 d'une boîte de vitesses 16 par l'intermédiaire d'un embrayage à friction 17.

La boîte de vitesses 16 est une boîte à au moins un rapport de marche arrière et à rapports multiples de marche avant.

Selon une conception connue, la commande manuelle de changement de rapport est assurée au moyen d'un mécanisme de commande manuelle 18 qui comporte un levier de changement de vitesse 20 sur le pommeau 22 duquel agit le conducteur et qui est articulé autour d'un axe fixe 24 de manière que son extrémité inférieure 26 agisse par exemple sur des câbles de commande de la sélection et du passage des différents rapports. Le levier 20 coopère avec une grille, non représentée, de sélection et de passage dont chaque ligne sélectionnée permet le passage de deux vitesses consécutives.

On a représenté sur la figure le câble 28 assurant, sous l'action du levier 20, le passage de l'un ou l'autre des deux rapports de la ligne de passage sélectionnée par le conducteur.

La boîte de vitesses 16 est par exemple du type à six rapports de marche avant, c'est-à-dire à trois groupes de deux rapports consécutifs de marche avant, la dernière de ces lignes correspondant dans ce cas aux cinquième et sixième rapports de marche avant.

Le câble 28 est relié à un organe 30 de commande de la boîte de vitesses qui peut être à la fois un organe de sélection d'une ligne de passage et un organe de passage de l'un ou l'autre des deux rapports d'une même ligne préalablement sélectionnée.

Le levier 20 de changement de vitesse comporte un capteur 29, de conception connue, qui détecte toute action du conducteur sur le pommeau 22 du levier de changement de vitesse 20 et qui délivre des signaux qui sont ainsi représentatifs du souhait du conducteur de changer de rapport.

Conformément à l'invention, le mécanisme 18 de commande manuelle comporte un capteur 32 agencé sur le câble 28 et qui délivre un signal représentatif de l'effort de passage d'un rapport appliqué par le conducteur au levier de changement de vitesse 20 lors du passage d'un rapport.

Les signaux fournis par les capteurs 29 et 32 sont transmis à un calculateur électronique principal 34, par exemple à microprocesseur, qui échange des signaux avec un calculateur 36 de gestion électronique du moteur 10.

Le calculateur principal 34 peut transmettre des ordres de commande à un organe 38 de réglage de la charge du moteur, par exemple à une pompe d'injection, par l'intermédiaire d'un premier calculateur secondaire 40 qui, comme le calculateur principal 34, reçoit des signaux représentatifs de la position de la pompe à injection 38 par l'intermédiaire d'un capteur 42 associé à cette dernière.

L'embrayage à friction 17 est ici commandé par l'intermédiaire d'un vérin hydraulique à simple effet 44 qui agit sur la butée 46 de l'embrayage et dont la chambre de commande 48 est alimentée en fluide hydraulique sous pression à travers une électrovanne 50 à trois voies et à commande proportionnelle en débit.

L'électrovanne 50 est alimentée en fluide sous pression par une ligne 52 à partir d'un accumulateur 54 et elle est reliée à un réservoir 56 par une ligne 58, sa sortie étant reliée à la chambre 48 par une ligne 60.

L'électrovanne 50 à commande électromagnétique est pilotée directement par le calculateur principal 34.

L'accumulateur hydraulique 54 constitue la source de fluide sous pression non seulement pour le vérin 44 de commande de l'embrayage 18, mais aussi pour un vérin hydraulique à double effet à commande proportionnelle 62 qui, conformément aux enseignements de l'invention, peut assurer un passage automatique de certains des rapports de la boîte de vitesses 16, ou une assistance au passage d'autres rapports.

Le vérin 62 comporte deux chambres opposées 64 et 66 dont chacune est reliée par une ligne 68, 70 à l'accumulateur 54 et au réservoir 56 à travers un distributeur hydraulique 72 à quatre voies et à trois positions, à travers un réducteur de pression à commande proportionnelle 74, et à travers un clapet formant interrupteur 76.

Le distributeur 72 est représenté sur la figure dans sa position neutre dans laquelle la communication est interrompue entre l'accumulateur 54 et le vérin 62, les chambres 68 et 70 étant mises en court-circuit hydraulique l'une avec l'autre.

Lorsque le distributeur hydraulique 72 est actionné vers l'une ou l'autre des deux autres positions extrêmes en vue de l'alimentation de l'un ou l'autre des deux chambres 64 ou 66 du vérin 62, une des entrées du distributeur 72 est reliée à l'accumulateur 54 par une ligne 78 dans laquelle sont interposés le réducteur de pression 74 et l'interrupteur 76.

Le distributeur hydraulique 72 à commande électromagnétique est commandé par le calculateur principal 34 à travers un second calculateur intermédiaire 80 qui assure aussi la commande du réducteur de pression à commande proportionnelle 74 et de l'interrupteur 76.

Le réducteur de pression 74 à commande électromagnétique proportionnelle permet de réguler la pression en direction du distributeur hydraulique 72, le réducteur de pression 74 étant du type à trois voies, sa troisième voie étant reliée au réservoir 56.

L'interrupteur 76 constitué par le clapet à commande électromagnétique 76 est commandé par le calculateur secondaire 80 et il est représenté sur la figure en position de coupure, c'est-à-dire la position dans laquelle l'alimentation du distributeur 72 à travers le réducteur de pression 74 est interrompue.

Le clapet 76 est susceptible d'occuper une autre position dans laquelle la liaison hydraulique est rétablie entre l'accumulateur 54 et le réducteur de pression 74.

Le réducteur de pression 74 est normalement dans sa position d'ouverture maximale, c'est-à-dire la position dans laquelle la pression d'entrée dans le distributeur hydraulique 72 est maximale, cette pression pouvant être réduite en fonction des ordres de commande qui sont adressés au réducteur 74 par le calculateur secondaire 80 qui est relié au calculateur principal 34.

Selon une conception connue, la régulation de la pression à l'intérieur de l'accumulateur 54 et son alimentation sont assurées par une pompe 82 et un interrupteur manométrique 84.

La tige de sortie du vérin 62 est équipée d'un capteur 67 qui délivre au calculateur principal 34 un signal représentatif de la position du vérin 62 et la tige de sortie du vérin 44 est équipée d'un capteur équivalent 49, les capteurs 67 et 49 transmettant leurs signaux au calculateur principal 34.

Les deux modes d'actionnement du vérin hydraulique à double effet 62 sont les suivants.

Selon un premier mode, et par exemple lorsque le conducteur désire changer un rapport parmi les quatre premiers rapports de marche avant, le calculateur 34 analyse les signaux qui lui sont fournis par les capteurs 29 et 32 pour commander, d'une part, l'embrayage 17 par l'intermédiaire du vérin hydraulique à simple effet 44 et, d'autre part, l'actionnement en mode proportionnel du vérin à double effet 62 qui fournit alors un effort d'assistance au passage du rapport, l'effort d'assistance étant taré en fonction de l'effort appliqué manuellement par le conducteur sur le levier de changement de vitesses 20 lors du passage du rapport, et qui est mesuré par le capteur 32 et en fonction de la course du vérin 62 mesurée par le capteur 67.

Selon ce premier mode d'actionnement, le vérin 62 constitue un vérin d'assistance au passage des quatre premiers rapports de marche avant.

Selon un second mode d'actionnement du vérin 62, intervenant lorsque le conducteur sélectionne la ligne des rapports de marche les plus élevés, c'est-à-dire celle des cinquième et sixième rapports de la boîte de vitesses 16, le passage de l'un ou l'autre de ces deux rapports est contrôlé par l'unité électronique de commande constituée par le calculateur principal 34 et par les calculateurs secondaires 40 et 80, par exemple en fonction de paramètres représentatifs de la charge du moteur 10, notamment en vue d'optimiser le rendement du moteur 10 et la consommation de carburant du véhicule.

Le conducteur n'a ainsi qu'à sélectionner la ligne de rapports les plus élevés, le passage de l'un ou l'autre des deux rapports étant effectué automatiquement par le vérin 62.

Tant que le conducteur ne manifeste pas son désir de changer de rapport pour revenir à un rapport situé sur une autre ligne de passage, par exemple le quatrième rapport de marche avant, le passage de l'un ou l'autre des cinquième et sixième rapports est toujours effectué automatiquement par les calculateurs 34, 40 et 80.

Le câble 28 de commande du passage des rapports est alors désaccouplé de l'organe 30 de commande de la boîte de vitesses 16 par l'intermédiaire d'un dispositif 88, non détaillé sur la figure, qui provoque automatiquement ce désaccouplement dès que la ligne de passage des rapports les plus élevés est sélectionnée par le conducteur.

La présence du dispositif 88 permet d'éviter des mouvements du levier de changement de vitesse 20 dans le sens du passage de l'un ou l'autre des deux rapports de marche avant les plus élevés pendant les changements automatiques de rapport.

Dès que le conducteur sélectionne à nouveau une ligne associée à deux rapports inférieurs de la boîte, le boîtier 88 rétablit automatiquement la liaison mécanique du câble 28 avec l'organe de commande 30 de manière à ce qu'il permette à nouveau le passage manuel et assisté des rapports en vue de leur engagement par action manuelle sur le levier 20 avec un effort d'assistance fourni par le levier 62.

## Revendications

1. Dispositif de changement de vitesses pour véhicule automobile comportant une boîte de vitesses (16) à rapports étagés reliée au moteur (10) du véhicule par un embrayage (17), un levier de changement de vitesses (20) coopérant avec une grille de sélection et de passage manuel des vitesses et relié à un organe de commande (30) de la boîte (16), un vérin de commande (62) de l'organe (30,) et une unité de commande (34, 40, 80) du vérin (62) en réponse aux demandes de changement de rapport du conducteur, caractérisé en ce qu'il comporte un capteur (32) mesurant l'effort appliqué manuellement au levier (20) par le conducteur pour passer manuellement une vitesse, dont le signal est transmis à l'unité (34) de commande du vérin (62) pour fournir une assistance au passage du rapport, et en ce que l'unité de commande (34, 40, 80), lorsque le conducteur a sélectionné la ligne de passage des rapports de marche avant les plus élevés, actionne le vérin (62) pour changer automatiquement de rapport en fonction d'un paramètre de fonctionnement du véhicule.

2. Dispositif selon la revendication 1, caractérisé en ce qu'il comporte un câble (28) de liaison entre le levier de changement de vitesse (20) et l'organe de commande de la boite de vitesse (30), sur lequel est agencé le capteur d'effort (32).

3. Dispositif selon la revendication 1, caractérisé en ce que le paramètre de fonctionnement du véhicule est représentatif de la charge du moteur (10).

4. Dispositif selon la revendication 1, 2 ou 3, caractérisé en ce que le vérin (62) est un vérin hydraulique dont les deux chambres de commande (64, 66) sont reliées à une source de fluide sous pression (54) par l'intermédiaire d'un distributeur (72) commandé par l'unité de commande (34, 80).

5. Dispositif selon la revendication 4, caractérisé en ce qu'il comporte un réducteur de pression piloté par l'unité de commande (34, 80) et qui est interposé entre la source de fluide sous pression (54) et le distributeur hydraulique (72) pour permettre un pilotage proportionnel en pression du vérin (62).

6. Dispositif selon l'une des revendications 4 ou 5, caractérisé en ce qu'il comporte un clapet (76) piloté par l'unité de commande (34, 80) qui est interposé entre la source de fluide sous pression (54) et le distributeur hydraulique (72).

7. Dispositif selon la revendication 6 prise en combinaison avec la revendication 5, caractérisé en ce que le clapet (76) piloté est agencé en amont du réducteur de pression piloté (74).

8. Dispositif selon l'une quelconque des revendications précédentes, caractérisé en ce que l'unité de commande comporte au moins un calculateur principal (34) qui reçoit des signaux représentatifs d'une demande de changement de rapport par le conducteur (29), du fonctionnement du véhicule et de l'état du vérin (67), et au moins un calculateur secondaire (80) relié au calculateur principal (34) et qui commande l'actionnement du vérin (62).

9. Dispositif selon la revendication 8 prise en combinaison avec l'une quelconque des revendications 4 à 7, caractérisé en ce les composants (72, 74, 76) qui pilotent l'alimentation en fluide hydraulique sous pression des chambres du vérin (62) sont reliés au calculateur secondaire (80).

10. Dispositif selon l'une quelconque des revendications précédentes, caractérisé en ce qu'il comporte un vérin (44) à simple effet à commande proportionnelle qui agit sur l'embrayage (17) et dont l'actionnement est commandé par l'unité de commande (34).

11. Dispositif selon l'une quelconque des revendications précédentes, caractérisé en ce qu'il comporte des moyens (88) pour interrompre la liaison mécanique entre le mécanisme (18) de commande manuelle de changement de rapport et l'organe de commande de la boîte de vitesses (10) lorsque les deux rapports de marche avant les plus élevés sont sélectionnés par le conducteur.
